# FASCICULE DE BREVET EUROPEEN

(11) **EP 2 912 396 B1**
(45) Date de publication et mention de la délivrance du brevet: **11.10.2017**
(21) Numéro de dépôt: 13789210.5
(22) Date de dépôt: 22.10.2013
(51) Int. Cl.: F28F 9/00, F28F 9/02, F28D 7/16

(54) **ÉCHANGEUR THERMIQUE, NOTAMMENT POUR VEHICULE AUTOMOBILE**
WÄRMETAUSCHER, INSBESONDERE FÜR EIN KRAFTFAHRZEUG
HEAT EXCHANGER, PARTICULARLY FOR A MOTOR VEHICLE

(30) Priorité: 25.10.2012 FR 1260192
(43) Date de publication de la demande: 02.09.2015
(73) Titulaire: Valeo Systemes Thermiques, 78320 Le Mesnil Saint Denis (FR)
(72) Inventeur: VALLEE, Nicolas, F-51110 Bazancourt (FR)
(74) Mandataire: Metz, Gaëlle
(86) Numéro de dépôt international: PCT/EP2013/072038
(87) Numéro de publication internationale: WO 2014/064086

(56) Documents cités:
- WO-A1-2007/113320
- JP-A- 2001 241 872
- US-A1- 2003 010 479
- US-A1- 2005 161 206

## Description

L'invention concerne un échangeur thermique notamment pour véhicule automobile selon le préambule de la revendication 1. Un tel échangeur est connu du document US 2005 0161206. Un domaine d'application préférentiel de l'invention est celui des moteurs thermiques suralimentés, notamment de véhicules automobiles, qui utilisent un échangeur de chaleur particulier, encore appelé refroidisseur d'air de suralimentation (en abrégé RAS), pour refroidir un fluide, à savoir l'air de suralimentation du moteur.

En effet, les moteurs thermiques suralimentés, ou turbo-compressés, en particulier les moteurs diesel, sont alimentés en air comprimé appelé air de suralimentation provenant d'un turbo-compresseur actionné par les gaz d'échappement du moteur.

Toutefois, cette compression a pour effet d'échauffer l'air qui se trouve à une température trop élevée et il est souhaitable, pour un bon fonctionnement du moteur, de le refroidir afin d'abaisser sa température avant son admission dans les cylindres du moteur.

On utilise pour cela, de manière classique, un échangeur thermique appelé refroidisseur d'air de suralimentation.

Ce refroidisseur a pour fonction de refroidir l'air de suralimentation par échange thermique avec un autre fluide comme de l'air extérieur ou un liquide comme l'eau glycolée du circuit de refroidissement du moteur, formant ainsi un échangeur du type air/air ou liquide/air.

Un tel refroidisseur peut être implanté dans un endroit choisi du compartiment moteur, en particulier près du moteur, et assure notamment la fonction d'admission de l'air de suralimentation vers chacun des cylindres du moteur.

De façon connue, un échangeur thermique, et plus précisément un refroidisseur d'air de suralimentation, comprend des éléments d'échange thermique et d'écoulement de fluide dans lesquels circulent des fluides échangeant de la chaleur entre eux.

De nombreuses associations de fluides peuvent être envisagées, qu'il s'agisse de liquides et/ou de gaz. En particulier, dans le cas des échangeurs, dits refroidisseurs d'air de suralimentation, on peut prévoir un échange thermique entre l'air de suralimentation, destiné à alimenter le moteur du véhicule, et un fluide de refroidissement, notamment un liquide de refroidissement tel qu'un mélange d'eau et de glycol.

De nombreuses configurations structurelles sont envisageables.

On connaît des échangeurs comprenant un faisceau d'échange thermique entre les deux fluides, tels que l'air de suralimentation et le liquide de refroidissement, un carter de réception logeant le faisceau d'échange thermique, et au moins une boîte collectrice pour le fluide gazeux tel que l'air de suralimentation, permettant la circulation de l'air de suralimentation à travers l'échangeur.

Selon une solution connue, le faisceau d'échange thermique comprend un empilement de plaques disposées parallèlement les unes aux autres sur une ou plusieurs rangées parallèles entre elles, ces plaques étant agencées pour définir d'une part des premiers canaux de circulation d'un premier fluide et d'autre part des seconds canaux de circulation d'un deuxième fluide en échangeant de la chaleur avec le premier fluide.

Ces plaques peuvent être alternées avec des éléments de perturbation de l'écoulement d'un fluide, par exemple d'un fluide gazeux comme l'air de suralimentation.

De façon connue, les plaques guident le liquide de refroidissement dans un circuit comprenant une ou plusieurs passes. Ces plaques ont la forme générale d'un rectangle allongé ayant deux grands cotés et deux petits cotés, et comportent respectivement deux bossages, un premier des bossages présentant une entrée du circuit de circulation de liquide de refroidissement et l'autre des bossages présentant une sortie du circuit de circulation du liquide de refroidissement. Les bossages sont situés le long d'un même petit côté de la plaque. Les bossages d'une plaque sont destinés à venir en contact avec les bossages d'une plaque adjacente pour permettre au liquide de refroidissement de passer d'un canal de circulation à un autre.

Ainsi, le fluide de refroidissement est réparti entre les plaques par les bossages d'entrée. Il s'écoule ensuite le long de la ou des passes des circuits de circulation du liquide de refroidissement jusqu'à sortir des plaques au niveau des bossages de sortie.

Chaque plaque comprend ainsi une zone d'échange de chaleur entre le liquide de refroidissement et l'air de suralimentation, située au niveau de la ou des passes de circulation, et une zone d'entrée/sortie permettant au fluide de refroidissement d'entrer et de sortir des plaques.

Un inconvénient de cette configuration est que la zone dans laquelle se situent les bossages concentre des contraintes mécaniques pouvant engendrer une rupture des éléments brasés entre eux.

En outre, cette zone présentant les bossages est très préjudiciable pour la performance thermique. En effet, l'air de suralimentation traversant cette zone, ne passe pas par la zone d'échange entre les deux fluides et n'échange donc pas ou presque pas de chaleur avec le liquide de refroidissement.

Il est connu pour contourner cette problématique de modifier les composants de l'échangeur ou d'ajouter une pièce supplémentaire faisant écran et permettant de limiter le passage du fluide à refroidir par cette zone. Mais cela complexifie les composants et/ou le processus de fabrication de l'échangeur, ce qui peut engendrer un surcoût et éventuellement une augmentation du poids de l'échangeur.

Pour pallier ces difficultés, il a déjà été envisagé par le déposant dans une demande de brevet non encore publiée, des échangeurs thermiques comprenant un collecteur de fluide de refroidissement, extérieur aux plaques du faisceau d'échange thermique. Le fluide de refroidissement alimente alors l'échangeur thermique, depuis le collecteur, par une plaque collectrice à travers laquelle des canaux de circulation du fluide de refroidissement du faisceau d'échange thermique débouchent dans le collecteur.

Cet agencement nécessite de prévoir espace de liaison suffisant entre la plaque collectrice et au moins un couvercle de fermeture du collecteur.

En outre, une telle plaque collectrice comprend généralement des collets entourant les canaux de circulation du fluide de refroidissement. Ces collets participent au maintien mécanique des plaques du faisceau d'échange thermique par rapport au carter.

Cependant, ces collets nécessitent de prévoir un espace de liaison supplémentaire pour l'assemblage de la plaque collectrice aux parois du carter et au couvercle de fermeture du collecteur, et qui est non négligeable.

L'invention a pour objectif de pallier ces inconvénients de l'art antérieur en proposant un échangeur thermique présentant de bonnes performances d'échange thermique tout en améliorant l'assemblage entre un couvercle de fermeture du collecteur et la plaque collectrice.

À cet effet, l'invention a pour objet un échangeur thermique pour véhicule automobile selon la revendication 1. Ainsi, la solidarisation entre le couvercle de fermeture du collecteur et la plaque collectrice se fait à plat.

En outre, en adaptant la hauteur d'au moins une ouverture de la plaque collectrice, en diminuant la hauteur d'au moins une de ces ouvertures, la matière restante de la plaque collectrice pour réaliser une portion de liaison pour l'assemblage du couvercle de fermeture du collecteur est plus importante.

De ce fait, la zone de fixation est plus importante. Et, dans le cas d'un assemblage par brasage la tenue au brasage est améliorée.

De plus, la coopération entre cette portion de liaison de la plaque collectrice et un bord relevé correspondant du couvercle de fermeture du collecteur, permet un assemblage à proximité des ouvertures d'extrémité de la plaque collectrice dépourvues de collets. On peut obtenir un gain de matière par rapport aux solutions de l'art antérieur présentant des collets et ainsi réduire le coût.

Ledit échangeur peut en outre comporter une ou plusieurs caractéristiques suivantes, prises séparément ou en combinaison :
- la différence de hauteur est supérieure ou égale à 0,2 mm,
- la deuxième hauteur est inférieure à la première hauteur,
- la première hauteur est de l'ordre de 4 mm et la deuxième hauteur est de l'ordre de 3,5 mm,
- la plaque collectrice présente au moins deux deuxièmes ouvertures agencées côte à côte,
- le bord relevé correspondant dudit au moins un couvercle de fermeture du collecteur présente une surface sensiblement plane coopérant avec ladite portion de liaison plane,
- le carter présente au moins deux parois latérales, et au moins deux parois de fermeture supérieure et inférieure, et la plaque collectrice forme une paroi latérale du carter,
- la plaque collectrice présente au moins un bord relevé adjacent à la portion de liaison et coopérant avec une paroi de fermeture du carter,
- le bord relevé de la plaque collectrice présente une surface sensiblement plane coopérant avec une surface sensiblement plane de la paroi de fermeture du carter,
- ledit échangeur comprend une boîte collectrice pour le premier fluide formée sur une paroi latérale du carter,
- le faisceau d'échange thermique comporte un empilement de plaques présentant respectivement un bord d'extrémité relevé fixé au bord des ouvertures de la plaque collectrice,
- ledit échangeur est assemblé par brasage.
Les caractéristiques et avantages de l'invention apparaîtront plus clairement à la lecture de la description suivante, donnée à titre d'exemple illustratif et non limitatif, et des dessins annexés parmi lesquels :
- la figure 1a est une vue en perspective éclatée représentant partiellement un échangeur thermique comprenant un carter selon un premier mode de réalisation,
- la figure 1b est une vue en perspective éclatée représentant partiellement un échangeur thermique comprenant un carter selon un deuxième mode de réalisation,
- la figure 2 représente partiellement une vue en coupe de l'échangeur thermique,
- la figure 3 illustre une plaque collectrice d'un collecteur de l'échangeur thermique.

Dans ces figures, les éléments sensiblement identiques portent les mêmes références.

L'invention concerne un échangeur thermique, en particulier pour refroidir l'air de suralimentation pour moteur thermique, tel qu'un moteur diesel de véhicule automobile.

Un tel échangeur peut être un échangeur dit « air-eau », c'est-à-dire un échangeur dans lequel les fluides qui échangent de la chaleur sont l'air et l'eau. Dans le cas d'un refroidisseur d'air de suralimentation; l'eau est de préférence de l'eau du circuit de refroidissement dit "basse température" dudit moteur; il s'agit typiquement d'eau glycolée, c'est-à-dire un mélange d'eau et de glycol.

Bien entendu, l'invention n'est pas limitée aux refroidisseurs d'air de suralimentation de véhicules automobiles et peut s'appliquer à d'autres types d'échangeurs thermiques.

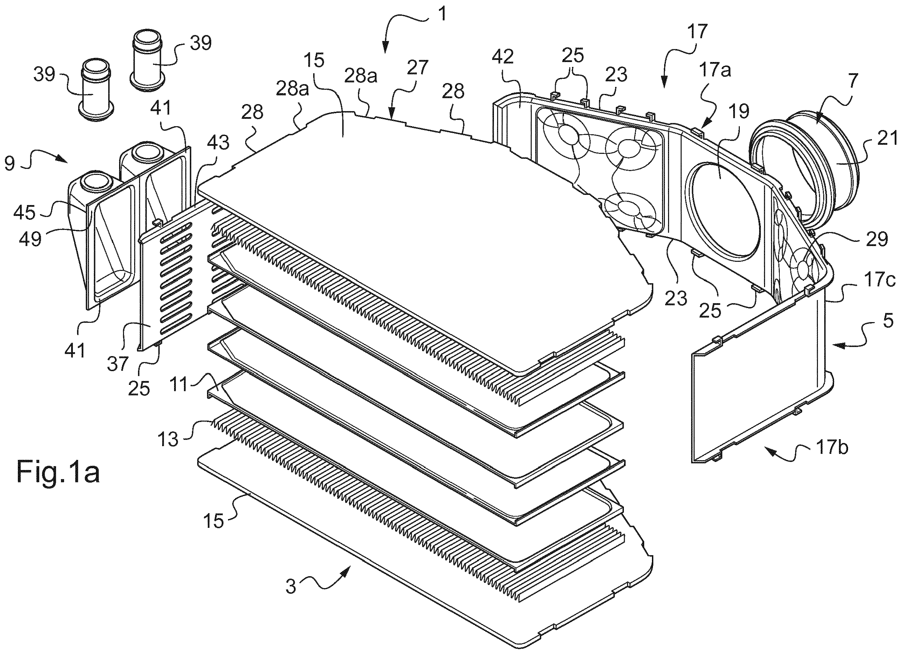

On a représenté sur la figure 1a, un échangeur 1 thermique selon un premier mode de réalisation.

Il s'agit par exemple d'un refroidisseur d'air de suralimentation pour un moteur du véhicule automobile. Un tel échangeur 1 peut être fixé sur la culasse du moteur (non représenté) pour permettre l'admission de l'air refroidi au moteur. À cet effet, l'échangeur 1 peut comporter une boîte d'admission d'air (non représentée) apte à être fixée sur la culasse du moteur (non représentée).

Cet échangeur 1 comporte :
- un faisceau 3 d'échange thermique entre un premier fluide tel que de l'air de suralimentation et un deuxième fluide tel que le fluide de refroidissement, par exemple de l'eau glycolée,
- un carter 5 de réception du faisceau d'échange 3,
- au moins une boîte collectrice 7 du premier fluide, ici de l'air de suralimentation, et
- un collecteur 9 du deuxième fluide, ici l'eau glycolée.

Le faisceau 3 présente par exemple une forme générale sensiblement parallélépipédique avec deux grands côtés opposés et deux petits côtés opposés.

Le faisceau 3 comprend un empilement de tubes plats.

Selon le mode de réalisation décrit, tous les tubes plats sont identiques.

Chaque tube est par exemple formé par l'assemblage d'une paire de plaques 11 en regard. L'échangeur 1 est donc du type à plaques.

Une plaque 11 présente une forme générale rectangulaire. Il s'agit par exemple de plaques embouties 11.

Les plaques 11 sont par exemple réalisées en aluminium ou en alliage d'aluminium.

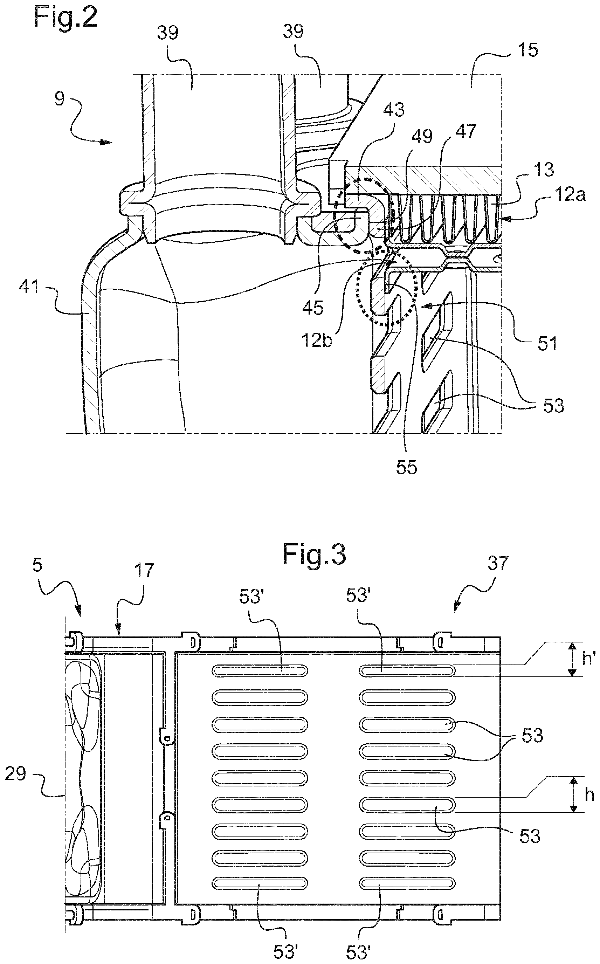

En référence à la figure 2, l'empilement des plaques 11 permet de délimiter d'une part des premiers canaux 12a pour la circulation du premier fluide, ici l'air, et d'autre part des seconds canaux 12b pour la circulation du second fluide, ici le fluide de refroidissement tel que de l'eau glycolée.

Les premiers canaux 12a pour la circulation de l'air sont définis entre deux paires de plaques 11.

Les plaques 11 assemblées définissent entre elles un passage pour l'écoulement d'un fluide, en particulier le fluide de refroidissement, tel que l'eau glycolée. Un tel passage peut présenter une épaisseur sensiblement constante. Ce passage forme un second canal 12b pour la circulation de l'eau glycolée dans notre exemple.

Ainsi, les plaques 11 assemblées par paires délimitent entre elles des canaux de circulation alternés 12b, 12a d'une part pour un fluide de refroidissement, le plus souvent l'eau glycolée de refroidissement du circuit du moteur, et d'autre part pour l'air de suralimentation à refroidir.

Les tubes plats peuvent être disposés en alternance avec des intercalaires 13 (cf figures 1a, 2). Les intercalaires 13 sont donc agencés dans les premiers canaux 12a pour la circulation de l'air dans notre exemple.

Un intercalaire 13 est par exemple formé à partir d'une feuille mince ondulée conductrice de la chaleur, dont les crêtes sont en contact alternativement avec les deux tubes plats de part et d'autre de l'intercalaire 13. Il s'agit par exemple d'une feuille d'aluminium ou en alliage d'aluminium.

Un flux d'air peut circuler à travers les intercalaires 13, pour échanger de la chaleur, avec le fluide, ici l'eau glycolée, circulant dans les tubes plats. Les intercalaires 13 perturbent l'écoulement de l'air de façon à augmenter la surface d'échange.

Les intercalaires 13 forment donc des éléments de perturbation. La perturbation permet de faciliter les échanges thermiques entre l'air et l'eau glycolée au travers des parois des plaques 11.

Comme mentionné précédemment, le faisceau d'échange 3 est reçu dans un carter 5.

Le carter 5 est par exemple réalisé dans un alliage d'aluminium.

Selon l'exemple illustré, le carter 5 comporte par exemple :
- deux plaques de fermeture 15, de part et d'autre du faisceau 3 dans le sens d'empilement des plaques 11, et
- au moins une paroi latérale 17 reliant les deux plaques de fermeture 15.

Le carter 5 comporte une plaque supérieure de fermeture et une plaque inférieure de fermeture. La plaque supérieure peut être sensiblement plane. De même, la plaque inférieure peut être sensiblement plane.

Comme illustré sur la figure 1a, le carter 5 peut présenter une paroi latérale 17 de forme sensiblement en « L ».

Selon le premier mode de réalisation illustré sur la figure 1a, cette paroi latérale 17 comprend une première partie 17a située au niveau de l'arrivée de l'air de suralimentation par rapport au sens d'écoulement d'air. On parle donc de première partie frontale 17a par rapport au sens d'écoulement du fluide.

Cette première partie frontale 17a ferme un grand côté du faisceau 3 selon l'exemple illustré.

La paroi latérale 17 sensiblement en «L» présente une deuxième partie d'extrémité 17b. Cette deuxième partie d'extrémité 17b ferme un petit côté du faisceau 3 selon l'exemple illustré.

La première partie frontale 17a et la deuxième partie d'extrémité 17b de la paroi latérale 17 sont réalisées d'une seule pièce selon le mode de réalisation illustré sur la figure 1a.

La première partie frontale 17a et la deuxième partie d'extrémité 17b peuvent être reliées par une partie de liaison 17c sensiblement arrondie.

En outre, selon le mode de réalisation décrit, la boîte collectrice 7 est intégrée dans le carter 5. Cette boîte collectrice 7 est reliée à un circuit d'air dans lequel est monté l'échangeur 1. L'air est donc introduit dans les plaques 11 par l'intermédiaire de la boîte collectrice 7.

La boîte collectrice 7 comporte un orifice 19 formé sur le carter 5, plus précisément sur la partie frontale 17a de la paroi latérale 17, et cet orifice 19 communique avec une tubulure 21. Il s'agit notamment d'une tubulure 21 saillante.

De plus, la paroi latérale 17 présente des zones de raccordement aux plaques supérieure et inférieure 15.

Selon l'exemple illustré, la paroi latérale 17 présente sur ses bordures périphériques 23 des pattes de maintien 25 repliées pour le raccordement aux plaques supérieure et inférieure 15. Les plaques supérieure et inférieure 15 présentent respectivement une bordure 27 de forme complémentaire d'une bordure périphérique 23 de la paroi latérale 17 pour une fixation par coopération de forme. Les bordures périphériques 23 de la paroi latérale 17 sont maintenues aux plaques supérieure et inférieure 15 par exemple par sertissage.

Selon l'exemple illustré, une bordure 27 d'une plaque de fermeture supérieure ou inférieure 15 présente des saillies 28, par exemple sensiblement rectangulaires, sur lesquelles sont repliées deux pattes de maintien 25 associées de la bordure périphérique 23 en vis-à-vis de la paroi latérale 17. Plus précisément, la bordure 27 présente une alternance de saillies 28 et de décrochements 28a.

L'ensemble peut être brasé par la suite.

Par ailleurs, la paroi latérale 17 peut présenter au moins une surface sensiblement convexe 29 adjacente à l'admission d'air.

Selon l'exemple illustré, la paroi latérale 17 présente deux surfaces sensiblement convexes 29 de part et d'autre de l'admission d'air. En particulier, c'est la partie frontale 17a de la paroi latérale 17 qui présente ces deux surfaces sensiblement convexes 29.

La convexité des surfaces 29 peut être orientée vers la direction générale de contraintes exercées sur le carter 5 lors de l'écoulement de l'air de suralimentation.

Ces surfaces convexes 29 peuvent s'étendre sensiblement sur toute la hauteur de la paroi latérale 17.

De telles surfaces convexes 29 permettent notamment de limiter les déplacements de la surface de la paroi latérale 17 lors de l'écoulement de l'air de suralimentation.

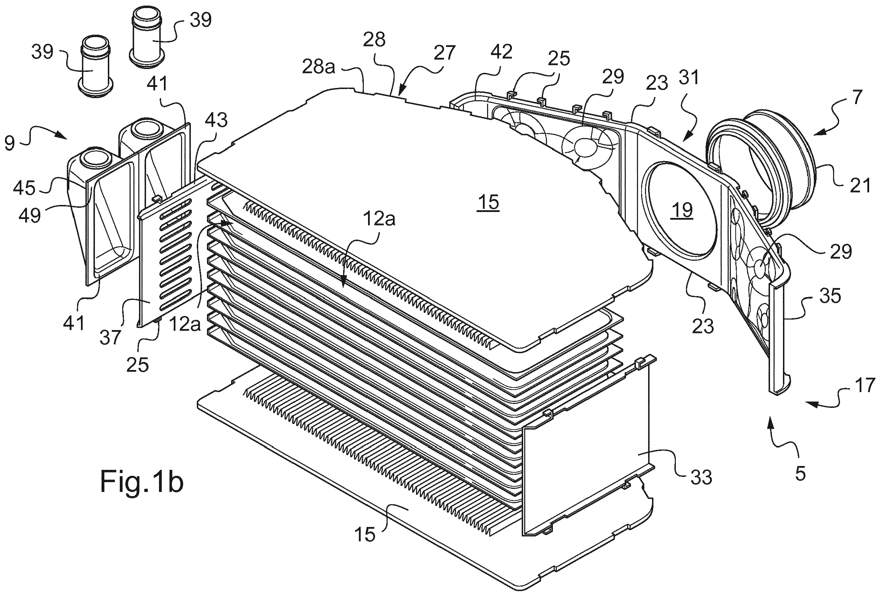

Selon un deuxième mode de réalisation illustré sur la figure 1b, le carter 5 ne présente plus une paroi latérale 17 mais au moins deux parois latérales : une première paroi frontale 31 et au moins une deuxième paroi d'extrémité longitudinale 33.

Selon cet exemple, la première paroi frontale 31 se situe au niveau de l'arrivée de l'air de suralimentation par rapport au sens d'écoulement d'air et la boîte collectrice 7 est intégrée à cette première paroi frontale 31.

De plus, la première paroi frontale 31 présente sur ses bordures périphériques 23 des pattes de maintien 25 repliées pour le raccordement aux plaques supérieure et inférieure 15.

La première paroi frontale 31 peut présenter un bord arrondi 35 apte à être assemblé à la paroi d'extrémité longitudinale 33.

De plus, cette première partie frontale 31 peut présenter une ou plusieurs surfaces sensiblement convexes 29 adjacentes à l'admission d'air telles que décrites précédemment en référence à la figure 1a.

La paroi frontale 31 ferme un grand côté du faisceau 3 selon l'exemple illustré, et la paroi d'extrémité ferme un petit côté du faisceau 3.

La paroi frontale 31 est analogue à la partie frontale 17a de la paroi latérale 17 décrite en référence à la figure 1a, et la paroi d'extrémité longitudinale 33 est analogue à la partie d'extrémité 17b de la paroi latérale 17 décrite en référence à la figure 1a.

Par ailleurs, l'échangeur 1 comporte un collecteur 9 pour permettre la circulation du deuxième fluide, tel que l'eau glycolée, dans l'échangeur 1. Ce collecteur 9 est par exemple rapporté sur le carter 5.

Le collecteur 9 comporte une plaque collectrice 37, des tubulures 39 d'entrée et de sortie d'eau dans l'échangeur 1, associées à un circuit d'eau dans lequel l'échangeur 1 est monté et communiquant respectivement avec la plaque collectrice 37, et au moins un couvercle 41 fermant le collecteur 9.

La plaque collectrice 37 est agencée au niveau d'un petit côté du faisceau 3. La plaque collectrice 37 est selon l'exemple illustré sur la figure 1a agencée à l'opposé de la partie d'extrémité 17b de la paroi latérale 17 du carter 5. Et, selon l'exemple représenté sur la figure 1b, la plaque collectrice 37 est agencée à l'opposé de la paroi d'extrémité longitudinale 33 du carter 5.

Cette plaque collectrice 37 est assemblée au carter 5, par exemple par brasage, et forme une paroi latérale du carter 5 : une paroi d'extrémité longitudinale du carter 5 dans notre exemple. La plaque collectrice 37 peut être réalisée en aluminium ou en alliage d'aluminium.

En se référant aux figures 1a et 1b, la plaque collectrice 37 peut être assemblée à un bord sensiblement arrondi 42 de la paroi latérale 17 du carter 5.

De plus, la plaque collectrice 37 comprend au moins un bord périphérique relevé 43 apte à venir en appui contre une plaque de fermeture 15 du carter 5. En particulier, ce bord périphérique relevé 43 est apte à venir en appui contre un bord sensiblement plan de la plaque de fermeture 15, supérieure ou inférieure.

Le bord périphérique relevé 43 est selon le mode de réalisation représenté plié sensiblement à 90° et orienté vers les couvercles 41 du collecteur 9.

Le bord périphérique 43 peut présenter une surface sensiblement plane en vis-à-vis de la plaque supérieure ou inférieure 15, de façon à former une partie de liaison plane apte à être solidarisée à la plaque supérieure ou inférieure 15 du carter 5.

Selon l'exemple illustré sur la figure 1a, et sur la figure 1b, la plaque collectrice 37 présente deux bords opposés relevés 43 destinés à la fixation d'une part avec la plaque de fermeture 15 supérieure et d'autre part avec la plaque de fermeture 15 inférieure.

Selon l'exemple illustré, le collecteur 9 comprend deux couvercles 41 étanches respectivement associés à une tubulure 39 et fixés sur la plaque collectrice 37, de façon à former une boîte collectrice d'entrée et une boîte collectrice de sortie du deuxième fluide, ici l'eau glycolée.

Cette fixation est par exemple obtenue par brasage. Les couvercles 41 peuvent également être réalisés en aluminium ou en alliage d'aluminium.

Pour ce faire, un couvercle 41 présente un bord périphérique de fixation 45 qui coopère avec au moins une portion de liaison correspondante 47 de la plaque collectrice 37, mieux visible sur la figure 2.

Une portion de liaison 47 de la plaque collectrice est donc apte à être solidarisée à un couvercle 41 associé du collecteur 9.

En référence aux figures 1a, 1b, la plaque collectrice 37 présente deux portions de liaison 47 aux extrémités de la plaque collectrice 37 et adjacentes à un bord périphérique relevé 43 de la plaque collectrice 37.

Une portion de liaison 47 peut présenter une surface en vis-à-vis du collecteur 9 sensiblement plane, de façon à former une partie de liaison plane apte à être solidarisée aux couvercles 41.

Le bord périphérique de fixation 45 correspondant d'un couvercle 41 peut quant à lui être plié sensiblement à 90°.

De plus, le bord relevé 45 d'un couvercle 41 est agencé de façon à venir en appui contre une portion de liaison 47, ici sensiblement plane, de la plaque collectrice 37.

Ce bord de fixation relevé 45 d'un couvercle 41 peut présenter une surface plane 49 destinée à la solidarisation avec la plaque collectrice 37.

En particulier, les portions de liaison 47 de la plaque collectrice 37 et le bord correspondant 45 d'un ou des couvercles 41, présentent respectivement une surface plane, de sorte que la fixation entre la plaque collectrice 37 et un couvercle 41 se fait sensiblement à plat.

La zone de coopération plane entre un couvercle 41 et la plaque collectrice 37 est entourée par des tirets sur la figure 2. Dans le cas d'un assemblage par brasage, on parle également de plat de brasage.

En outre, la plaque collectrice 37 présente une partie centrale 51 ajourée présentant des ouvertures 53, 53' (cf figures 2 et 3). La partie centrale 51 peut être sensiblement plane.

Selon le mode de réalisation décrit, la plaque collectrice 37 présente une partie centrale 51 sensiblement plane et deux bords périphériques 43 relevés sensiblement à 90°, de sorte que la plaque collectrice 37 présente en section transversale une forme sensiblement en « U » ; les bords relevés 43 formant les deux branches du « U ».

Les plaques 11 sont agencées de sorte que les seconds canaux de circulation 12b du deuxième fluide, tel que l'eau glycolée, débouchent dans les ouvertures 53, 53' de la plaque collectrice 37. Seules deux plaques 11 assemblées sont représentées sur la figure 2.

En référence à la figure 3, la plaque collectrice 37 présente par exemple une première colonne d'ouvertures 53, 53' et une deuxième colonne d'ouvertures 53, 53'. Une colonne d'ouverture 53, 53' est agencée de façon à communiquer avec un couvercle 41 associé délimitant la boîte collectrice d'entrée ou de sortie du deuxième fluide, tel que l'eau glycolée.

De plus, les ouvertures 53, 53' de la plaque collectrice 37 présentent des hauteurs différentes. En effet, la plaque collectrice 37 peut comporter des premières ouvertures 53 présentant une première hauteur h, et au moins une deuxième ouverture 53' présentant une deuxième hauteur h' différente de la première hauteur h.

En particulier, une deuxième ouverture 53' présente une deuxième hauteur h' inférieure à la première hauteur h.

La première hauteur h des premières ouvertures 53 peut correspondre à un standard de réalisation pour les plaques collectrices 37 dans le domaine des échangeurs thermiques.

Cette diminution de hauteur permet d'obtenir une portion de liaison 47 de la plaque collectrice 37 plus grande par rapport aux solutions connues, pour le brasage entre la plaque collectrice 37 et un couvercle 41, au droit de la zone de coopération entourée par des tirets sur la figure 2.

La réduction d'au moins une ouverture 53' de la plaque collectrice 37 permet donc d'améliorer l'assemblage du collecteur 9, en particulier des couvercles 41, sur la plaque collectrice 37. On améliore ainsi la tenue au brasage.

Selon un mode de réalisation préféré, la différence de hauteur ente une première ouverture 53 et une deuxième ouverture 53' est d'au moins 0,2 mm. Cette valeur correspond à la tolérance des plaques collectrices 37 dans le domaine des échangeurs thermiques.

À titre d'exemple illustratif, une première ouverture 53 présente par exemple une première hauteur h de l'ordre de 4 mm et une deuxième ouverture 53' présente par exemple une deuxième hauteur h' de l'ordre de 3,5 mm.

La Demanderesse a constaté qu'une telle différence de hauteur n'influe pas sur les performances de l'échangeur thermique 1. En effet, les performances de l'échangeur thermique 1 ne sont pas dégradées, notamment en termes de perte de charge et de répartition du débit. Pour ce faire, la différence de hauteur ne doit pas être supérieure à une limite supérieure. On peut prévoir que cette limite supérieure soit de l'ordre de la moitié de la première hauteur h correspondant par exemple à un standard dans le domaine des plaques collectrices d'échangeurs thermiques.

Par ailleurs, on peut prévoir une seule ouverture 53' de hauteur h' différente des autres ouvertures 53.

Cette ouverture 53 est agencée en extrémité de la plaque collectrice 37. On peut aussi prévoir plus d'une ouverture 53' de hauteur h'. À titre d'exemple, on peut prévoir deux ouvertures 53' côte à côte communiquant respectivement avec la tubulure d'entrée 39 et la tubulure de sortie 39 du collecteur 9. Bien entendu, en variante, on peut avoir deux ouvertures côte à côte dont une première ouverture 53 de première hauteur h et une deuxième ouverture 53' de deuxième hauteur h'.

Selon l'exemple illustré sur la figure 3, les ouvertures 53' d'extrémité supérieure et inférieure de la plaque collectrice 37 sont des deuxièmes ouvertures 53' de deuxième hauteur h' plus petite que la hauteur h des premières ouvertures 53 sur le reste de la plaque collectrice 37.

Par ailleurs, les plaques 11 sont assemblées, par exemple par brasage à la plaque collectrice 37. La zone d'assemblage entre une plaque 11 et la plaque collectrice 37 est entourée par des pointillés sur la figure 2.

Pour ce faire, les plaques 11 présentent respectivement un bord d'extrémité relevé 55 apte à être assemblé à la plaque collectrice 37.

Le bord d'extrémité relevé 55 est selon le mode de réalisation représenté plié sensiblement à 90°.

En référence à la figure 2, les bords d'extrémité 55 des plaques 11 d'une paire de plaques 11 définissant un second canal 12b de circulation pour le deuxième fluide, ici l'eau glycolée, sont orientés selon deux sens opposés. On remarque sur la figure 2, qu'un bord d'extrémité 55 d'une plaque 11 est orienté vers le premier canal 12a de circulation pour le premier fluide adjacent. Autrement dit, un bord d'extrémité 55 est orienté soit vers le haut soit vers le bas en référence à la figure 2.

Ce bord d'extrémité 55 définit donc une surface de coopération avec la plaque collectrice 37, par exemple avec le bord des ouvertures 53 ou 53' de la plaque collectrice 37.

De plus, le bord d'extrémité 55 d'une plaque 11 peut être sensiblement plan, de façon à former une partie de liaison plane apte à être solidarisée à la plaque collectrice 37.

Selon l'exemple illustré sur la figure 2, les bords d'extrémité 55 des plaques 11 sont plans et sont agencés de façon à venir autour des bords des ouvertures 53 ou 53' de la plaque collectrice 37.

Avec cette configuration, il n'est pas nécessaire de prévoir des collets autour des ouvertures 53, 53' de la plaque collectrice 37.

Ainsi, selon le mode de réalisation illustré sur la figure 2, on retrouve de part et d'autre de la plaque collectrice 37, d'une part un bord plan 45 du collecteur 9 et d'autre part les bords d'extrémité plans 55 des plaques 11.

L'ensemble formé par les plaques 11, éventuellement les intercalaires ondulés 13, le collecteur 9, la plaque collectrice 37 et le carter 5 peut donc être brasé.

On comprend donc qu'un tel échangeur thermique 1 comprenant un collecteur 9 tel que défini précédemment avec une plaque collectrice 37 présentant des ouvertures 53, 53' de hauteur variable, permet d'augmenter la zone de brasage entre les couvercles 41 et la plaque collectrice 37 du collecteur, et ainsi d'améliorer la tenue de brasage tout en conservant les performances de l'échangeur thermique 1. En effet, la portion de liaison 47 peut être augmentée par rapport à une plaque collectrice 37 présentant des ouvertures de même hauteur, les dimensions de la plaque collectrice 37 étant définies par exemple selon un standard dans le domaine des échangeurs thermiques.

De plus, la liaison à plat entre les couvercles 41 et la plaque collectrice 37 permet d'obtenir une liaison étanche fiable entre les couvercles 41 et la plaque collectrice 37.

Enfin, la liaison entre les couvercles 41 et la plaque collectrice 37, grâce à la portion de liaison 47 peut se faire à proximité des ouvertures 53, 53' de la plaque collectrice 37 et ces ouvertures 53, 53' sont dépourvues de collets, ce qui contribue aussi à augmenter la zone de brasage entre les couvercles 41 et la plaque collectrice 37.

## Revendications

1. Échangeur thermique pour véhicule automobile, comprenant :
- un faisceau d'échange thermique (3) entre au moins un premier fluide et un deuxième fluide comprenant des premiers canaux (12a) de circulation du premier fluide et des seconds canaux de circulation (12b) du deuxième fluide,
- un carter (5) de réception dudit faisceau (3), et
- un collecteur (9) pour le deuxième fluide comprenant :
• une plaque collectrice (37) présentant des ouvertures (53, 53') dans lesquelles débouchent les seconds canaux de circulation (12b) du deuxième fluide, et
• au moins un couvercle de fermeture (41) du collecteur (9) pour le deuxième fluide,
- ledit au moins un couvercle de fermeture (41) du collecteur (9) présente au moins un bord relevé (45) et la plaque collectrice présente une portion de liaison plane (47) correspondante, la portion de liaison plane (47) étant adjacente à au moins un bord périphérique de la plaque collectrice (37), et **caractérisé en ce que**
- la plaque collectrice (37) présente un nombre prédéfini de premières ouvertures (53) de première hauteur (h) et au moins une deuxième ouverture (53') de deuxième hauteur (h') différente de la première hauteur (h) et **en ce que** la deuxième hauteur (h') est inférieure à la première hauteur (h) et ladite au moins une deuxième ouverture (53') est agencée à une extrémité de la plaque collectrice (37), de sorte qu'en diminuant la hauteur (h') de la deuxième ouverture (53') de la plaque collectrice (37), la matière restante pour réaliser ladite portion de liaison (47) est plus importante.

2. Échangeur selon la revendication précédente, dans lequel la plaque collectrice (37) présente au moins deux deuxièmes ouvertures (53') agencées côte à côte.

3. Échangeur selon l'une quelconque des revendications précédentes, dans lequel le bord relevé (45) correspondant dudit au moins un couvercle de fermeture (41) du collecteur (9) présente une surface (49) sensiblement plane coopérant avec ladite portion de liaison (47) plane.

4. Échangeur selon l'une quelconque des revendications précédentes, dans lequel le carter (5) présente au moins deux parois latérales (17, 31 , 33 ; 37), et au moins deux parois de fermeture supérieure et inférieure (15), et en ce que la plaque collectrice (37) forme une paroi latérale du carter (5).

5. Échangeur selon la revendication 4, dans lequel la plaque collectrice (37) présente au moins un bord périphérique relevé (43) adjacent à la portion de liaison (47) et coopérant avec une paroi de fermeture (15) du carter (5).

6. Échangeur selon la revendication 5, dans lequel le bord périphérique relevé (43) de la plaque collectrice (37) présente une surface sensiblement plane coopérant avec une surface sensiblement plane de la paroi de fermeture (15) du carter (5).

7. Échangeur selon l'une quelconque des revendications 5 à 6, comprenant une boîte collectrice (7) pour le premier fluide formée sur une paroi latérale (17 ; 31) du carter (5).

8. Échangeur selon l'une quelconque des revendications précédentes, dans lequel le faisceau d'échange thermique (3) comporte un empilement de plaques (11) présentant respectivement un bord d'extrémité (55) relevé fixé au bord des ouvertures (53, 53') de la plaque collectrice (37).

## Patentansprüche

1. Wärmetauscher für ein Kraftfahrzeug, welcher umfasst:
- ein Wärmeaustauschbündel (3) zum Wärmeaustausch zwischen wenigstens einem ersten Fluid und einem zweiten Fluid, welches erste Kanäle (12a) für die Zirkulation des ersten Fluids und zweite Kanäle für die Zirkulation (12b) des zweiten Fluids umfasst,
- ein Gehäuse (5) zur Aufnahme des Wärmeaustauschbündels (3), und
- einen Sammler (9) für das zweite Fluid, welcher umfasst:
• eine Sammelplatte (37), die Öffnungen (53, 53') aufweist, in welche die zweiten Kanäle für die Zirkulation (12b) des zweiten Fluids münden, und
• wenigstens einen Verschlussdeckel (41) des Sammlers (9) für das zweite Fluid,
- wobei der wenigstens eine Verschlussdeckel (41) des Sammlers (9) wenigstens einen hochgezogenen Rand (45) aufweist und die Sammelplatte einen entsprechenden ebenen Verbindungsabschnitt (47) aufweist, wobei der ebene Verbindungsabschnitt (47) wenigstens einem Umfangsrand der Sammelplatte (37) benachbart ist, und **dadurch gekennzeichnet, dass**
- die Sammelplatte (37) eine vordefinierte Anzahl von ersten Öffnungen (53) mit einer ersten Höhe (h) und wenigstens eine zweite Öffnung (53') mit einer zweiten Höhe (h'), die von der ersten Höhe (h) verschieden ist, aufweist,
und dadurch, dass die zweite Höhe (h') kleiner als die erste Höhe (h) ist und die wenigstens eine zweite Öffnung (53') an einem Ende der Sammelplatte (37) angeordnet ist, derart, dass, indem die Höhe (h') der zweiten Öffnung (53') der Sammelplatte (37) verringert wird, das verbleibende Material zur Herstellung des Verbindungsabschnitts (47) umfangreicher ist.

2. Wärmetauscher nach dem vorhergehenden Anspruch, wobei die Sammelplatte (37) wenigstens zwei zweite Öffnungen (53') aufweist, die nebeneinander angeordnet sind.

3. Wärmetauscher nach einem der vorhergehenden Ansprüche, wobei der entsprechende hochgezogene Rand (45) des wenigstens einen Verschlussdeckels (41) des Sammlers (9) eine im Wesentlichen ebene Fläche (49) aufweist, die mit dem ebenen Verbindungsabschnitt (47) zusammenwirkt.

4. Wärmetauscher nach einem der vorhergehenden Ansprüche, wobei das Gehäuse (5) wenigstens zwei Seitenwände (17, 31, 33; 37) und wenigstens zwei Verschlusswände, eine obere und eine untere (15), aufweist, und dass die Sammelplatte (37) eine Seitenwand des Gehäuses (5) bildet.

5. Wärmetauscher nach Anspruch 4,
wobei die Sammelplatte (37) wenigstens einen hochgezogenen Umfangsrand (43) aufweist, der dem Verbindungsabschnitt (47) benachbart ist und mit einer Verschlusswand (15) des Gehäuses (5) zusammenwirkt.

6. Wärmetauscher nach Anspruch 5, wobei der hochgezogene Umfangsrand (43) der Sammelplatte (37) eine im Wesentlichen ebene Fläche aufweist, die mit einer im Wesentlichen ebenen Fläche der Verschlusswand (15) des Gehäuses (5) zusammenwirkt.

7. Wärmetauscher nach einem der Ansprüche 5 bis 6, welcher einen Sammelkasten (7) für das erste Fluid umfasst, der an einer Seitenwand (17; 31) des Gehäuses (5) ausgebildet ist.

8. Wärmetauscher nach einem der Ansprüche, wobei das Wärmeaustauschbündel (3) einen Stapel von Platten (11) aufweist, die jeweils einen hochgezogenen Endrand (55) aufweisen, der am Rand der Öffnungen (53, 53') der Sammelplatte (37) befestigt ist.

## Claims

1. Heat exchanger for a motor vehicle, comprising:
- a heat exchange bundle (3) between at least a first fluid and a second fluid comprising first flow channels (12a) of the first fluid and second flow channels (12b) of the second fluid,
- a receiving casing (5) of the said bundle (3), and
- a collector (9) for the second fluid comprising:
• a collector plate (37) having openings (53, 53'), in which the second flow channels (12b) of the second fluid open, and
• at least one closure cover (41) of the collector (9) for the second fluid,
- the said at least one closure cover (41) of the collector (9) has at least one raised edge (45) and the collector plate has a corresponding planar connection portion (47), the planar connection portion (47) being adjacent to at least one peripheral edge of the collector plate (37), and **characterized in that**
- the collector plate (37) has a predefined number of first openings (53) having a first depth (h) and at least one second opening (53') having a second depth (h') which is different from the first depth (h) and **in that** the second depth (h') is less than the first depth (h)
and the said at least one second opening (53') is arranged at an end of the collector plate (37), such that by reducing the depth (h') of the second opening (53') of the collector plate (37), the remaining material for producing the said connection portion (47) is greater.

2. Exchanger according to the preceding claim, wherein the collector plate (37) has at least two second openings (53') which are arranged side by side.

3. Exchanger according to either of the preceding claims, wherein the corresponding raised edge (45) of the said at least one closure cover (41) of the collector (9) has a substantially planar surface (49) which cooperates with the said planar connection portion (47).

4. Exchanger according to one of the preceding claims, wherein the casing (5) has at least two side walls (17, 31, 33; 37) and at least two upper and lower closure walls (15), and in that the collector plate (37) forms a side wall of the casing (5).

5. Exchanger according to Claim 4, wherein the collector plate (37) has at least one raised peripheral edge (43) which is adjacent to the connection portion (47) and which cooperates with a closure wall (15) of the casing (5).

6. Exchanger according to Claim 5, wherein the raised peripheral edge (43) of the collector plate (37) has a substantially planar surface which cooperates with a substantially planar surface of the closure wall (15) of the casing (5).

7. Exchanger according to either of Claims 5 to 6, comprising a collection tank (7) for the first fluid, which tank is formed on a side wall (17; 31) of the casing (5).

8. Exchanger according to one of the preceding claims, wherein the heat exchange bundle (3) comprises a stack of plates (11) which have a raised end edge (55) which is fixed to the edge of the openings (53, 53') of the collector plate (37), respectively.
